# EUROPÄISCHE PATENTSCHRIFT

(11) **EP 2 595 826 B1**
(45) Veröffentlichungstag und Bekanntmachung des Hinweises auf die Patenterteilung: **28.05.2014**
(21) Anmeldenummer: 11740834.4
(22) Anmeldetag: 12.07.2011
(51) Int. Cl.: B60K 1/04

(54) **VORRICHTUNG ZUR SPANNUNGSVERSORGUNG MIT EINEM GEHÄUSE ZUR AUFNAHME ZUMINDEST EINES ENERGIESPEICHERMODULS**
VOLTAGE SUPPLY DEVICE COMPRISING A HOUSING FOR RECEIVING AT LEAST ONE ENERGY STORAGE MODULE
DISPOSITIF D'ALIMENTATION ÉLECTRIQUE COMPRENANT UN BOÎTIER POUR ACCUEILLIR AU MOINS UN MODULE ACCUMULATEUR D'ÉNERGIE

(30) Priorität: 23.07.2010 DE 102010038347
(43) Veröffentlichungstag der Anmeldung: 29.05.2013
(73) Patentinhaber: Bayerische Motoren Werke Aktiengesellschaft, 80809 München (DE)
(72) Erfinder: LOEFFLER, Robert, 85368 Moosburg (DE); WOESLE, Gerd, 80469 München (DE); LUSTIG, Robert, 81679 München (DE); HEINZ, Robert, 85774 Unterföhring (DE)
(86) Internationale Anmeldenummer: PCT/EP2011/003464
(87) Internationale Veröffentlichungsnummer: WO 2012/010268

(56) Entgegenhaltungen:
- EP-A1- 1 479 567
- EP-A1- 1 897 739
- GB-A- 2 382 232

## Beschreibung

Die Erfindung betrifft eine Vorrichtung zur Spannungsversorgung, insbesondere für ein Kraftfahrzeug, mit einem Gehäuse zur Aufnahme zumindest eines Energiespeichermoduls und/oder einer anderen Spannungsführenden Komponente, wobei das Energiespeichermodul und/oder die andere Spannungsführende Komponente an einer Gehäusefläche vom Gehäuseinneren her befestigt ist.

In einer üblicherweise als Batterie bezeichneten Vorrichtung zur Spannungsversorgung eines Kraftfahrzeugs kommst meist eine Mehrzahl an Energiespeichermodulen zum Antrieb von Fahrzeugen, beispielsweise von Elektrofahrzeugen oder Hybridfahrzeugen, zum Einsatz. Ein jeweiliges Energiespeichermodul besteht typischerweise aus mehreren gestapelten prismatischen oder zylindrischen Speicherzellen. Die einzelnen Speicherzellen enthalten elektrochemische Zellen der Batterie. Die Speicherzellen eines Energiespeichermoduls sind elektrisch miteinander verschaltet, um eine vorgegebene Gesamtspannung an Kontaktanschlüssen des Energiespeichermoduls bereitstellen zu können. Die Mehrzahl an Energiespeichermodulen wird innerhalb des Gehäuses der Vorrichtung zur Spannungsversorgung weiter elektrisch verschaltet, um die für den elektrischen Antrieb benötigte Spannung und Ströme bereitstellen zu können. Neben den Energiespeichermodulen sind häufig noch weitere-Spannungsführende Komponenten in dem Gehäuse der Vorrichtung zur Spannungsversorgung angeordnet, welche beispielsweise eine Steuerung und Überwachung der Energiespeichermodule übernehmen.

Die Befestigung der Energiespeichermodule sowie der anderen Spannungsführenden Komponenten erfolgt in der Regel über Steck- oder Schraubverbindungen. Durch die Befestigung der Energiespeichermodule und Spannungsführenden Komponenten erfolgt zum einen eine definierte Anordnung innerhalb des Gehäuses zur Vorrichtung der Spannungsversorgung. Zum anderen sorgt diese auch für die mechanische Fixierung der Komponenten. Aufgrund des hohen Gewichts der Energiespeichermodule ist man bestrebt, die Vorrichtung zur Spannungsversorgung in einem Kraftfahrzeug möglichst tief anzuordnen. Es ist deshalb möglich, dass die Vorrichtung zur Spannungsversorgung auch in einem der Witterung, Schmutz und Wasser ausgelieferten Bereich des Fahrzeugs montiert ist. Zur Vermeidung von technischen Defekten, wie z.B. einem Kurzschluss, muss das Gehäuse der Vorrichtung zur Spannungsversorgung deshalb wasserdicht ausgeführt sein.

Eine weitere Anforderung bei der Konstruktion einer Vorrichtung zur Spannungsversorgung besteht darin, dass alle von außen berührbaren, elektrisch leitfähigen Komponenten auf dem gleichen elektrischen Potential liegen müssen, so dass bei einer Berührung des Gehäuses der Vorrichtung keine Gefahr für die berührende Person ausgeht. Zwei Komponenten liegen dann auf gleichem elektrischem Potential, wenn sie über ihre Lebensdauer einen Übergangswiderstand von 10 mΩ bei einem Strom von 25 A aufweisen. Zur Erfüllung dieses Erfordernisses werden zwei, durch eine Person berührbare, Komponenten typischerweise durch eine stoffschlüssige Verbindung (z.B. Schweißen oder Löten) miteinander verbunden.

Um an der Außenseite des Gehäuses der Vorrichtung zur Spannungsversorgung möglichst wenige Teile durch konstruktive Maßnahmen auf gleiches elektrisches Potential bringen zu müssen, werden bislang zur Befestigung der im Gehäuseinneren angeordneten Energiespeichermodule und/oder Komponenten verwendete Elemente vom Inneren des Gehäuses her mit diesem befestigt, so dass eine Berührung von außen nicht möglich ist. Derartige Elemente sind beispielsweise Bolzen oder Muttern, so dass durch die Verwendung entsprechender Gegenstücke eine Schraubverbindung hergestellt werden kann. Ein weiterer Grund, die zur Befestigung verwendeten Elemente vom Gehäuseinneren her anzuordnen, liegt im oben beschriebenen Erfordernis der Wasserdichtigkeit des Gehäuses. Der Durchtritt der Befestigungselemente durch eine Gehäusefläche würde einen erhöhten Aufwand zur Herstellung der Wasserdichtigkeit nach sich ziehen.

Wenn als Material für das Gehäuse Stahl verwendet wird, so können die zur Befestigung notwendigen Elemente im Gehäuseinneren an das Gehäuse durch Schweißung oder Lötung befestigt werden. Bei einer Vorrichtung zur Spannungsversorgung eines Kraftfahrzeugs wird aus Gewichtsgründen jedoch bevorzugt auf Aluminium als Material für das Gehäuse zurückgegriffen. Eine Verschweißung eines Aluminium-Gehäuses mit Befestigungselementen (Bolzen oder Muttern) aus Stahl ist jedoch nicht möglich. Es sind deshalb zusätzliche Befestigungsbauteile notwendig, welche sich an das Aluminium-Gehäuse anschweißen lassen, mit denen dann die eigentlichen Befestigungselemente verbunden werden. Alternativ können auch beim Guss des Gehäuses bereits Gewinde integriert sein.

Die Verwendung von Befestigungsbolzen bei Antriebsbatteriegehäusen ist beispielsweise aus der Druckschrift GB 2 382 232 A bekannt. Dort ist eine Kastenstruktur offenbart, die einen Kastenkörper zur Aufnahme von elektrischen Hochspannungsteilen, insbesondere Batterien aufweist. Diese Kastenstruktur ist unter anderem mittels Bolzen an Karosseriekomponenten des Fahrzeugs befestigt.

All die vorgenannten Vorgehensweisen erschweren jedoch die Herstellung des Gehäuses und verteuern dieses.

Es ist daher Aufgabe der vorliegenden Erfindung, eine Vorrichtung zur Spannungsversorgung, insbesondere für ein Kraftfahrzeug, anzugeben, bei der sich die in einem Gehäuse anzuordnenden Energiespeichermodule und/oder anderen Spannungsführenden Komponenten auf einfachere und raumökonomische Weise unabhängig von den verwendeten Materialien für das Gehäuse und den Befestigungselementen befestigen lassen.

Diese Aufgabe wird gelöst durch eine Vorrichtung zur Spannungsversorgung gemäß den Merkmalen des Patentanspruches 1. Vorteilhafte Ausgestaltungen ergeben sich aus den abhängigen Patentansprüchen.

Die Erfindung schafft eine Vorrichtung zur Spannungsversorgung, insbesondere für ein Kraftfahrzeug, mit einem Gehäuse zur Aufnahme zumindest eines Energiespeichermoduls und/oder einer anderen Spannungsführenden Komponente, wobei das Energiespeichermodul und/oder die andere Spannungsführende Komponente an einer Gehäusefläche vom Gehäuseinneren her befestigt sind. Die Vorrichtung zeichnet sich dadurch aus, dass das Gehäuse aus einem ersten Material gebildet ist, und die geschraubte Verbindung durch einen aus einem zweiten Material bestehenden Einpressbolzen gebildet ist, der zumindest einen Verbindungsabschnitt und einen Befestigungsabschnitt mit einem Außengewinde aufweist, wobei der Verbindungsabschnitt eine umlaufende Nut oder eine Anzahl voneinander beabstandeter Vertiefungen aufweist. Der Einpressbolzen ist von außerhalb der,Gehäusefläche mit dem Befestigungsabschnitt voran durch eine zugeordnete Ausnehmung gesteckt und im Bereich des Verbindungsabschnitts mit dem Material der Gehäusefläche verpresst, wobei aus dem Verpressen eine plastische Verformung des Materials der Gehäusefläche derart resultiert, dass in die Nut oder die Vertiefungen durch die Verpressung bzw. plastische Verformung das Material der Gehäusefläche eingebracht ist, so dass dadurch eine dichtende und einen minimalen Übergangswiderstand aufweisende Kontaktfläche der Verbindungspartner gegeben ist. Das Energiespeichermodul ist über eine auf dem Befestigungsabschnitt geschraubte Mutter an der Gehäusefläche befestigt.

Durch das Verpressen der Einpressbolzen mit der Gehäusefläche des Gehäuses wird nicht nur ein stabiler Befestigungspunkt zur Befestigung eines Energiespeichermoduls oder einer anderen Spannungsführenden Komponente geschaffen, sondern das Gehäuseinnere auch gegenüber dem Einbringen von Wasser und Feuchtigkeit geschützt, indem die Kontaktflächen dichtend sich aneinander schmiegen. Das Verspressen von Gehäusefläche und Einpressbolzen sorgt durch den im Bereich der Verpressung flächigen Kontakt weiterhin dafür, dass ein geringer Übergangswiderstand zwischen den beiden Komponenten hergestellt ist, wodurch sowohl das Gehäuse als auch der bzw. die Einpressbolzen auf gleichem elektrischem Potential entsprechend der eingangs beschriebenen Definition liegen. Aus dem.Verpressen resultiert eine plastische Verformung des Materials der Gehäusefläche. Hierdurch wird zum einen die mechanische Stabilität des Einpressbolzens zur späteren Befestigung des Energiespeichermoduls und/oder der anderen Spannungsführenden Komponente sichergestellt. Andererseits wird durch das Verpressen sichergestellt, dass zwischen dem Einpressbolzen und der zugeordneten Ausnehmung der Gehäusefläche kein Spalt bestehen bleibt, durch den Wasser oder Feuchtigkeit ins Gehäuseinnere eindringen könnte. Darüber hinaus sorgt der flächige Kontakt der Verbindungspartner für den geringen Übergangswiderstand. Dadurch dass der Verbindungsabschnitt eine umlaufende Nut oder eine Anzahl voneinander beabstandeter Vertiefungen aufweist, in die durch die Ver-pressung bzw. plastische Verformung das Material der Gehäusefläche eingebracht ist, kann die mechanische und elektrische Verbindung zwischen Einpressbolzen und Gehäuseflä-che weiter verbessert werden, da die Kontaktfläche vergrößert ist. Insbesondere ist in beiden potentiellen Bewegungsrichtungen des Einpressbolzens relativ zu der Gehäuse-fläche ein Form- und Kraftschluss hergestellt. Insbesondere beim Vorsehen einer umlaufenden Nut wird durch das in die Nut eindringende Material und den Labyrinthverlauf der Kontaktfläche das Eindringen von Wasser in das Innere des Gehäuses weiter erschwert.

Durch die Verwendung von Einpressbolzen, die von außen berührbar und dennoch wasserdicht sowie potentialausgeglichen sind, kann auf zusätzlich angebrachte Befestigungselemente im Inneren des Gehäuses bzw. wandstärkenvariable Fertigungsverfahren, wie z.B. einem Guss des Gehäuses, verzichtet werden. Hierdurch können Bauteile und Fertigungsschritte kostengünstig bereitgestellt bzw. realisiert werden. Das Gehäuse lässt sich kostengünstig, z.B. aus mehreren miteinander zu verbindenden Gehäuseflächen, herstellen.

Die Herstellung sowie Verarbeitung von Einpressbolzen ist aus dem Stand der Technik prinzipiell bekannt, so dass die Vorrichtung zur Spannungsversorgung prozesssicher hergestellt werden kann. Zugleich entstehen Bauraum-Vorteile, da die Einpressbolzen nicht in ihrer vollen Länge im Inneren des Gehäuses ausgebildet sind.

In einer weiteren Ausgestaltung ist das erste Material des Gehäuses Aluminium oder eine Legierung davon und das zweite Material der Einpressbolzen bzw. der Befestigungselemente Stahl oder eine Legierung davon. Die Verwendung von Aluminium für das Gehäuse ermöglicht einen Gewichtsvorteil, wodurch die Vorrichtung zur Spannungsversorgung gegenüber einem Gehäuse aus Stahl mit reduziertem Gewicht bereitgestellt werden kann. Eiripressbolzen aus Stahl weisen eine hohe Festigkeit auf und sind kostengünstig als standardisierte Bauteile von verschiedenen Herstellern verfügbar. Hierdurch können die Kosten der Vorrichtung zur Spannungsversorgung gering gehalten werden.

Gemäß einer weiteren Ausgestaltung ist der Einpressbolzen mit einer korrosionshemmenden und/oder einer den Übergangswiderstand zu der Gehäusefläche reduzierenden Beschichtung versehen. Vorzugsweise basiert die Beschichtung auf einer Zink-Nickel-Beschichtung. Insbesondere wird als Beschichtung ZNNISI verwendet. Durch die Beschichtung ist das eingangs beschriebene Erfordernis, dass zwischen Einpressbolzen und Gehäusefläche über die Lebensdauer ein Übergangswiderstand von 10 mΩ bei 25 A gewährleistet. Definitionsgemäß liegen die beiden Elemente damit auf gleichem elektrischem Potential, so dass von der erfindungsgemäßen Vorrichtung bei Berührung von auβerhalb des Gehäuses keine Gefahr für eine Person ausgeht.

In einer weiteren Ausgestaltung weist der Einpressbolzen an seinem dem Befestigungsabschnitt gegenüberliegenden Ende einen Kopf auf, der von außerhalb des Gehäuses in Anlage mit der Gehäusefläche gebracht ist. Zum einen kann hierdurch eine definierte Position des Einpressbolzens relativ zu der Gehäusefläche sichergestellt werden. Insbesondere kann dadurch das im Inneren an dem Befestigungsabschnitt ausgebildete Außengewinde in eine definierte Position relativ zu der Innenfläche des Gehäuses sichergestellt werden. Andererseits sorgt das Vorhandensein des Kopfes auch für eine weiter verbesserte Abdichtung. Um die Abdichtung im Bereich der Verbindung von Einpressbolzen in die Gehäusefläche weiter zu optimieren, kann vorgesehen sein, dass der Kopf an seiner der Gehäusefläche zugewandten Anlagefläche eine Dichtung, insbesondere einen O-Ring, aufweist.

Es ist weiterhin zweckmäßig, wenn der Außendurchmesser des Verbindungsabschnitts des Einpressbolzens und der Innendurchmesser der zugeordneten Ausnehmung der Gehäusefläche derart gewählt sind, dass eine Presspassung von Verbindungsabschnitt und Ausnehmung gegeben ist. Hierdurch können die eingangs erwähnten Erfordernisse - sichere Befestigung, geringer Übergangswiderstand zum Ausgleich des Potentials zur Gehäusefläche und Abdichtung - sichergestellt werden.

Es ist zweckmäßig, wenn die Gehäusefläche, in die die Einpressbolzen eingebracht werden, ein Boden des Gehäuses ist. Die Einbaulage sorgt dafür, dass das Wasser vom Kopf des Einpressbolzens wegläuft. Hierdurch ist die Wahrscheinlichkeit des Eindringens von Wasser oder Feuchtigkeit ins Innere des Gehäuses reduziert.

Die Erfindung wird weiter anhand eines Ausführungsbeispiels in der Zeichnung beschrieben. Es zeigen:
- Fig. 1: eine schematische Querschnittsdarstellung eines Teils eines Gehäuses für eine Vorrichtung zur Spannungsversorgung für ein Kraftfahrzeug,
- Fig. 2: eine schematische Querschnittsdarstellung zweier in zugeordnete Ausnehmungen eingebrachter Einpressbolzen,
- Fig. 3: eine vergrößert, schematische Darstellung der Herstellung einer plastischen Verformung im Bereich eines in das Gehäuse eingebrachten Einpressbolzens,
- Fig. 4: die resultierende plastische Verformung des Gehäuses im Bereich des Einpressbolzens, und
- Fig. 5: eine Teilansicht eines an einem Einpressbolzen befestigten Energiespeichermoduls der Vorrichtung zur Spannungsversorgung.

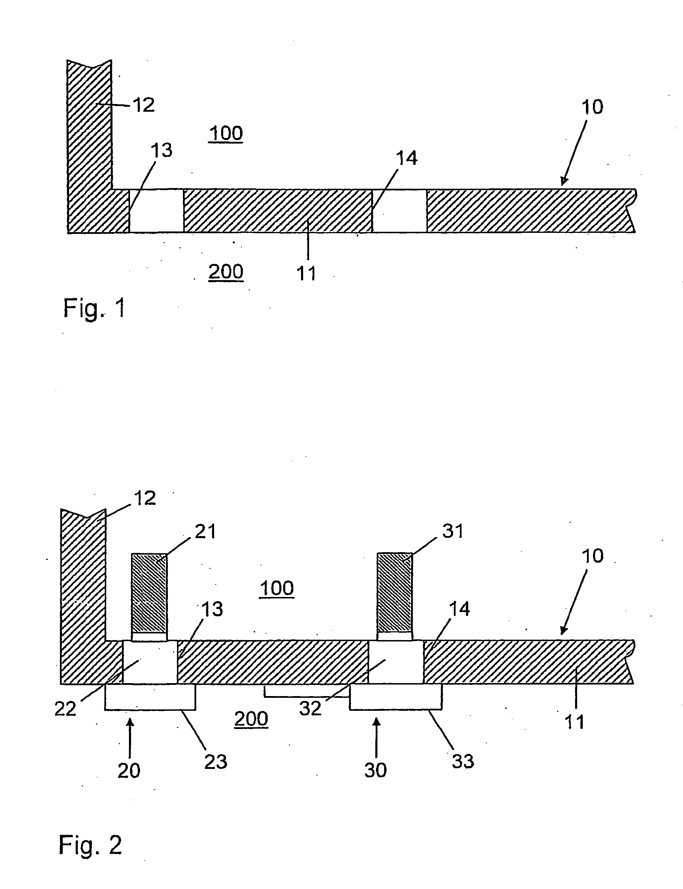

Fig. 1 zeigt in einer schematischen Querschnittsdarstellung einen Teil eines Gehäuses 10 zur Aufnahme zumindest eines Energiespeichermoduls sowie optional weiterer Spannungsführender Komponenten, welche z.B. zur Steuerung und Überwachung des zumindest einen Energiespeichermoduls dienen. Dargestellt sind als Gehäuseflächen ein Gehäuseboden 11 sowie ein. Teil einer Gehäusewand 12, die an den Gehäuseboden 11 anschließt. Das Gehäuse 10 ist aus Gewichtsgründen aus Aluminium oder einer Aluminium-Legierung gefertigt. Der Gehäuseboden 11 sowie die Gehäusewand 12 können einstückig, beispielsweise durch einen Gussprozess, ausgebildet sein. Alternativ können der Boden 11 und die Wand 12 auch aus separaten Teilen miteinander verbunden sein.

Am Gehäuseboden 11 sind lediglich beispielhaft zwei Ausnehmungen 13, 14 vorgesehen, durch die von außerhalb (Bezugszeichen 200) des Bodens 11 Einpressbolzen 20, 30 gesteckt werden. Dies ist exemplarisch in der Querschnittsdarstellung von Fig. 2 gezeigt. Prinzipiell könnten derartige Ausnehmungen alternativ oder zusätzlich auch an der Gehäusewand ausgebildet werden. An den nachfolgend näher beschriebenen Einpressbolzen 20, 30 können die im Gehäuseinneren 100 anzuordnenden Energiespeichermodule und weiterer Spannungsführender Komponenten befestigt werden.

Die Einpressbolzen 20, 30 weisen einen Kopf 23, 33, einen Befestigungsabschnitt 21, 31 und einen Verbindungsabschnitt 22, 32 auf, wobei der Befestigungsabschnitt-21, 31 und der Kopf 23, 33 auf gegenüberliegenden Seiten des Verbindungsabschnitts 22, 32 ausgebildet sind. Ein jeweiliger Befestigungsabschnitt 21,31 ist mit einem metrischen Außengewinde versehen, auf das eine Mutter korrespondierenden Innendurchmessers zur Befestigung der Energiespeichermodule bzw. Spannungsführenden Komponenten verschraubt werden kann.

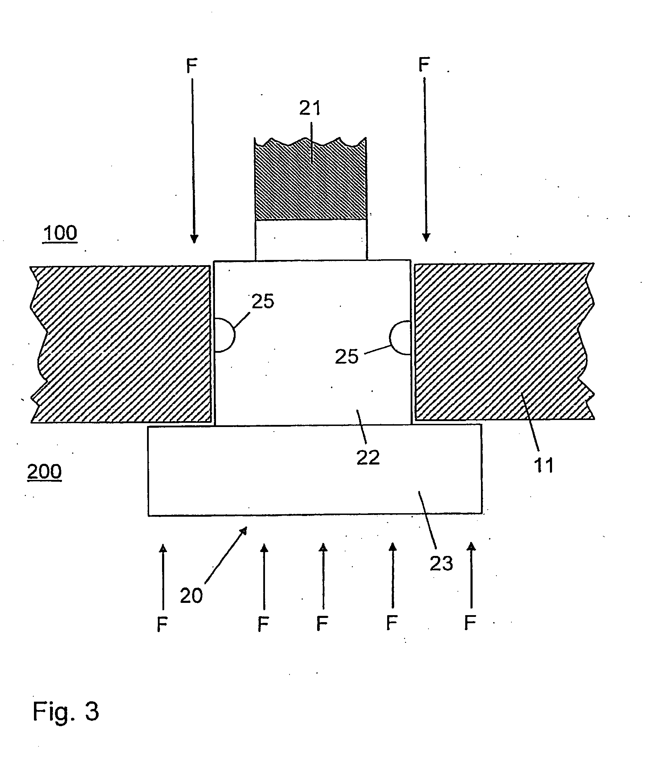

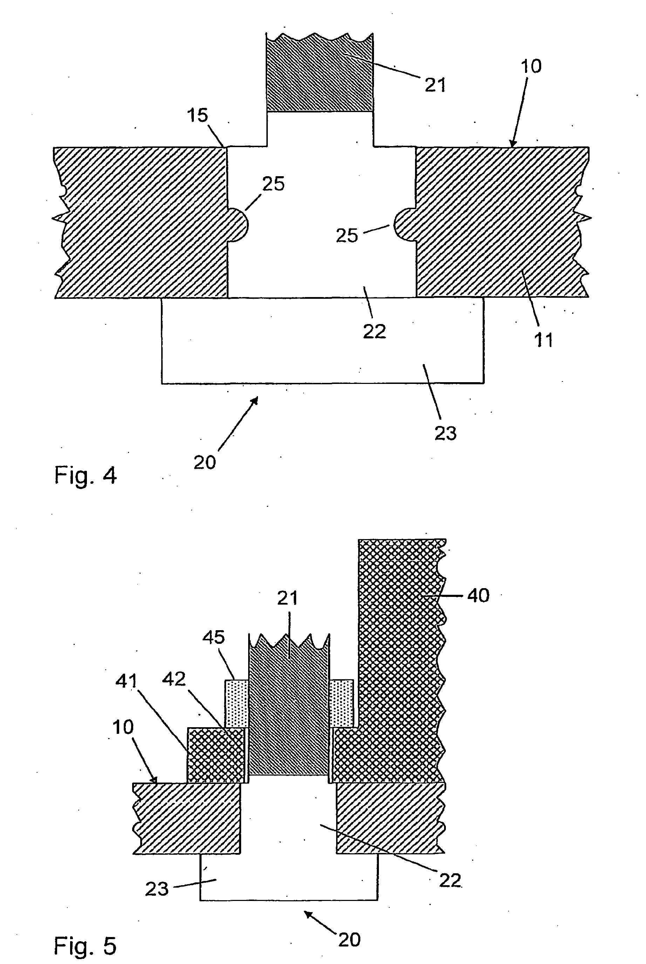

Die aus Stahl bestehenden Einpressbolzen 20, 30 werden von außerhalb des Gehäusebodens 11 mit dem Befestigungsabschnitt 21, 31 voran durch die jeweils zugeordnete Ausnehmung 13, 14 im Boden 11 des Gehäuses gesteckt und im Bereich des Verbindungsabschnitts mit dem Material des Bodens 11 verpresst. Zum Verpressen wird von außerhalb des Gehäuses 10 auf den jeweiligen Kopf 23, 33 des betreffenden Einpressbolzens 20, 30 eine Kraft F aufgebracht, während gleichzeitig von der Gehäuseinnenseite 100 her eine Kraft im Bereich der Schultern des Kopfes 23 aufgebracht wird. Typischerweise beträgt die Kraft ca. 70 kN, wobei eine Kraft-Weg-Überwachung erfolgt, um ein bestimmungsgemäßes Verpressen des Materials des Gehäusebodens 11 zu überwachen. Wie Fig. 3, die den Beginn des Verpressens, der eine plastische Verformung des Materials des Bodens 11 bewirkt, illustriert, weist ein jeweiliger Einpressbolzen im Bereich seines Verbindungsabschnitts 22 eine vorzugsweise umlaufende Nut 25 auf, in die bei der plastischen Verformung des Materials des Gehäusebodens 11 das Material fließt. Dies ist beispielhaft in Fig. 4 illustriert. Gleichzeitig bildet sich im Bereich des Gehäuseinneren um den an die Innenfläche des Gehäusebodens 11 angrenzenden Abschnitt des Verbindungsabschnitts 22 ein ringförmiger Wulst 15. Durch das in die umlaufende Nut 25 flieβende Material des Bodens 11 wird ein Kraft- und Formschluss in axialer Richtung des Einpressbolzens erzeugt, so dass dieser starr am Gehäuseboden 11 fixiert ist.

Durch das Anliegen des Kopfes 23 mit seinen Schultern an der Außenfläche des Bodens 11 sowie durch das in die Nut 25 geflossene Material ergibt sich eine Abdichtung des Gehäuseinneren 100 gegenüber auf die Gehäuseaußenseite 200 auftreffende Flüssigkeiten. Obwohl das in Fig. 4 illustrierte "Labyrinth", d.h. der Verlauf der Grenz- bzw. Kontaktflächen von Einpressbolzen 20 und Gehäuseboden 11, bereits ausreicht, eine sichere Abdichtung bereitzustellen, kann optional eine Dichtung zwischen dem Kopf 23 an seiner der. Gehäusefläche zugewandten Anlagefläche (d.h. seiner Schulter), wie z.B. ein O-Ring aus Gummi, vorgesehen sein.

Um sicherzustellen, dass ein jeweiliger Einpressbolzen 20, 30 und das Gehäuse 10 auf gleichem Potential liegen, ist der Einpressbolzen mit einer korrosionshemmenden und einer den Übergangswiderstand zu der Gehäusefläche reduzierenden Beschichtung versehen. Vorzugsweise basiert die Beschichtung auf Zink-Nickel, insbesondere wird ZNNISI verwendet.

Der Außendurchmesser des Verbindungsabschnitts 22, 32 eines jeweiligen Einpressbolzens 20, 30 und der Innendurchmesser der zugeordneten Ausnehmung 13, 14 des Bodens 11 sind derart gewählt, dass eine Presspassung von Verbindungsabschnitt 22, 32 und Ausnehmung 13, 14 gegeben ist. Auf diese Weise kann sichergestellt werden, dass einerseits eine gute Verankerung der Einpressbolzen an der Gehäusefläche 11 gegeben ist. Hierdurch wird auch die Dichtigkeit gewährleistet. Andererseits wird hierdurch sichergestellt, dass der Übergangswiderstand zwischen den aus Stahl bestehenden Einpressbolzen 20, 30 und der Gehäusefläche 11 aus Aluminium gegeben ist. Unterstützt durch die bereits erwähnte Beschichtung kann hierdurch ein gleiches elektrisches Potential der beiden Komponenten sichergestellt werden.

Die Länge der Verbindungsabschnitte 22, 32 ist in Abhängigkeit der Dicke der die Aussparungen 13, 14 aufweisenden Gehäusefläche 11 gewählt. Insbesondere muss sichergestellt sein, dass ein über den jeweiligen Befestigungsabschnitt 21, 31 gestecktes Bauteil (Energiespeichermodul oder weitere Spannungsführende Komponente) plan auf der Innenseite der Gehäusefläche 11 aufliegen kann, um eine feste und zuverlässige Verbindung sicherzustellen.

Die Befestigung eines beispielhaften Energiespeichermoduls 40, das ausschnittsweise in der Querschnittsdarstellung der Fig. 5 dargestellt ist, erfolgt, indem eine Ausnehmung 42 in einem Flansch 41 des Energiespeichermoduls 40 über den Befestigungsabschnitt 21 gesteckt wird, wobei über den über den Flansch hinausstehenden Teil des Befestigungsabschnitts 21 eine Mutter 45 gedreht wird.

Um die gleichzeitige Funktion von Wasserdichtigkeit und Potentialausgleich der von auβen durch die Gehäusefläche hindurch geführten Einpressbolzen sicherstellen zu können, muss das System von Oberflächenbeschichtung der Einpressbolzen, der verwendeten Einpresskräfte F, des Innendurchmessers der Ausnehmung 13 und 14 sowie der Dicke der Gehäusefläche 11 aufeinander abgestimmt sein. Die Parameter werden in der Regel durch den Hersteller des Einpressbolzens vorgegeben.

Anstelle der im Ausführungsbeispiel beschriebenen umlaufenden Nut im Bereich des Verbindungsabschnitts 22, 32 kann auch eine Anzahl an umfangsseitig verteilten Ausnehmungen vorgesehen sein. In diese Ausnehmungen bzw. Vertiefungen kann im Rahmen der plastischen Verformung der Gehäusefläche 11 das Material der Gehäusefläche 11 eindringen, so dass der für die Stabilität und die Dichtigkeit bevorzugte Form- und/oder Kraftschluss erreicht wird. Durch die vergrößerte Oberfläche wird auch der Übergangswiderstand verringert.

Im Ausführungsbeispiel ist die Gehäusefläche, in die die Ausnehmungen 13, 14 eingebracht sind, der Boden des Gehäuses 10. Prinzipiell kann auch eine beliebige andere Seitenwand mit Ausnehmungen für Einpressbolzen versehen werden. Das Anordnen der Einpressbolzen am Boden des Gehäuses 10 bringt jedoch den Vorteil mit sich, dass auf das Gehäuse auftreffendes Wasser durch die Schwerkraft von den Einpressbolzen 10 wegfließt, so dass das Eindringen von Wasser in das Gehäuseinnere alleine durch die Einbaulage vermieden werden kann.

### Bezugszeichenliste

- 10: Gehäuse
- 11: Gehäusefläche bzw. Boden
- 12: Wand
- 13: Ausnehmung
- 14: Ausnehmung
- 15: Materialanhäufung
- 20: Einpressbolzen
- 21: Befestigungsabschnitt
- 22: Verbindungsabschnitt
- 23: Kopf des Einpressbolzens
- 25: Nut im Verbindungsabschnitt
- 30: Einpressbolzen
- 31: Befestigungsabschnitt
- 32: Verbindungsabschnitt
- 33: Kopf des Einpressbolzens
- 40: Energiespeichermodul
- 41: Flansch
- 42: Ausnehmung
- 45: Mutter
- 100: Gehäuseinneres
- 200: Gehäuseaußenseite

## Patentansprüche

1. Vorrichtung zur Spannungsversorgung, insbesondere für ein Kraftfahrzeug, mit einem Gehäuse (10) zur Aufnahme zumindest eines Energiespeichermoduls (40) und/oder einer anderen, insbesondere spannungsführenden Komponente, wobei das Energiespeichermodul (40) und/oder die andere Komponente an einer Gehäusefläche (11) vom Gehäuseinneren (100) her befestigt ist, **dadurch gekennzeichnet, dass**
- das Gehäuse (10) aus einem ersten Material gebildet ist,
- die geschraubte Verbindung durch einen aus einem zweiten Material bestehenden Einpressbolzen (20, 30) gebildet ist, der zumindest einen Verbindungsabschnitt (22, 32) und einen Befestigungsabschnitt (21, 31) mit einem Außengewinde aufweist, wobei der Verbindungsabschnitt (22, 32) eine umlaufende Nut (25, 35) oder eine Anzahl voneinander beabstandeter Vertiefungen aufweist,
- der Einpressbolzen (20, 30) von außerhalb der Gehäusefläche (11) mit dem Befestigungsabschnitt (21, 31) voran durch eine zugeordnete Ausnehmung (13, 14) gesteckt und im Bereich des Verbindungsabschnitts (22, 32) mit dem Material der Gehäusefläche (11) verpresst ist, wobei aus dem Verpressen eine plastische Verformung des Materials der Gehäusefläche (11) derart resultiert, dass in die Nut (25, 35) oder die Vertiefungen durch die Verpressung-bzw. plastische Verformung das Material der Gehäusefläche (11) eingebracht ist, so dass dadurch eine dichtende und einen minimalen Übergangswiderstand aufweisende Kontaktfläche der Verbindungspartner gegeben ist, und
- das Energiespeichermodul (40) und/oder die andere spannungsführende Komponente über eine auf den Befestigungsabschnitt (21, 31) geschraubte Mutter (45) an der Gehäusefläche (11) befestigt ist.

2. Vorrichtung nach Anspruch 1, **dadurch gekennzeichnet, dass** das erste Material Aluminium oder eine Legierung davon und das zweite Material Stahl oder eine Legierung davon ist.

3. Vorrichtung nach einem der vorhergehenden Ansprüche, **dadurch gekennzeichnet, dass** der Einpressbolzen (20, 30) mit einer Korrosionshemmenden und/oder einer den Übergangswiderstand zu der Gehäusefläche (11) reduzierenden Beschichtung versehen ist.

4. Vorrichtung nach Anspruch 3, **dadurch gekennzeichnet, dass** die Beschichtung auf einer Zink-Nickel-Beschichtung basiert.

5. Vorrichtung nach einem der vorhergehenden Ansprüche, **dadurch gekennzeichnet, dass** der Einpressbolzen (20, 30) an seinem dem Befestigungsabschnitt (21, 31) gegenüberliegenden Ende einen Kopf (23, 33) aufweist, der von außerhalb des Gehäuses (10) in Anlage mit der Gehäusefläche (11) gebracht ist.

6. Vorrichtung nach Anspruch 5, **dadurch gekennzeichnet, dass** der Kopf (23, 33) an seiner der Gehäusefläche (11) zugewandten Anlagefläche eine Dichtung, insbesondere einen O-Ring, aufweist.

7. Vorrichtung nach einem der vorhergehenden Ansprüche, **dadurch gekennzeichnet, dass** der Außendurchmesser des Verbindungsabschnitts (22, 32) des Einpressbolzens (20, 30) und der Innendurchmesser der zugeordneten Ausnehmung (13, 14) der Gehäusefläche (11) derart gewählt sind, dass eine Presspassung von Verbindungsabschnitt (22, 32) und Ausnehmung (13, 14) gegeben ist.

8. Vorrichtung nach einem der vorhergehenden Ansprüche, **dadurch gekennzeichnet, dass** die Gehäusefläche (11) ein Boden des Gehäuses (10) ist.

## Claims

1. A device for supplying voltage, particularly for a motor vehicle, comprising a casing (10) for holding at least one energy storage module (40) and/or another, particularly live, component, wherein the energy storage module (40) and/or the other component is fastened to a casing surface (11), from the interior (100) of the casing, **characterised in that**
- the casing (10) is formed of a first material,
- the screwed connection formed by an insert pin (20, 30) of a second material, having at least one connecting portion (22, 32) and at least one fastening portion (21, 31) with an external thread, wherein the connecting portion (22, 32) has a peripheral groove (25, 35) or a number of spacedapart recesses,
- the insert pin (20, 30), starting from the outside of the casing surface (11), is inserted through an associated recess (13, 14) with the fastening portion (21, 31) at the front, and is pressed against the material of the casing surface (11) in the region of the connecting portion (22, 32), wherein the compression results in plastic deformation of the material of the casing surface (11) such that the material of the casing surface (11) is inserted into the groove (25, 35) or the recesses by compression or plastic deformation, resulting in a sealing contact surface, with minimum transition resistance, of the connected components, and
- the energy storage module (40) and/or the other live component is fastened to the casing surface (11) by a nut (45) screwed to the fastening portion (21, 31).

2. A device according to claim 1, **characterised in that** the first material is aluminium or an alloy thereof and the second material is steel or an alloy thereof.

3. A device according to any of the preceding claims, **characterised in that** the insert pin (20, 30) is provided with a coating which inhibits corrosion and/or reduces the transition resistance to the casing surface (11).

4. A device according to claim 3, **characterised in that** the coating is based on a zinc-nickel coating.

5. A device according to any of the preceding claims, **characterised in that** the insert pin (20, 30), at its end opposite the fastening portion (21, 31), has a head (23, 33) brought to abutment against the casing surface (11) from outside the casing (10).

6. A device according to claim 5, **characterised in that** the head (23, 33), at its abutment surface facing the casing surface (11), has a seal, particularly an O-ring.

7. A device according to any of the preceding claims, **characterised in that** the outer diameter of the connecting portion (22, 32) of the insert pin (20, 30) and the inner diameter of the associated recess (13, 14) in the casing surface (11) are chosen so as to obtain an interference fit between the connecting portion (22, 32) and the recess (13, 14).

8. A device according to any of the preceding claims, **characterised in that** the casing surface (11) is a base of the casing (10).

## Revendications

1. Dispositif d'alimentation en tension en particulier d'un véhicule à moteur comprenant un boitier (10) destiné à recevoir au moins un module accumulateur d'énergie (40) et/ou un autre composant en particulier conduisant la tension, le module accumulateur d'énergie (40) et/ou l'autre composant étant fixé sur une surface de boitier (11) à partir de l'intérieur de ce boitier,
**caractérisé en ce que** :
- le boitier (10) est réalisé en un premier matériau,
- la liaison par vis est formée par un boulon à encastrer (20, 30) réalisé en un second matériau qui comporte au moins un segment de liaison (22, 32) et un segment de fixation (21, 31) ayant un filetage externe, le segment de liaison (22, 32) comportant une rainure périphérique (25, 35) ou plusieurs cavités situées à distance les unes des autres,
- le boulon à encastrer (20, 30) est enfiché à partir de l'extérieur de la surface du boitier (11) avec le segment de fixation (21, 31) en travers d'un évidement (13, 14) associé, et est comprimé dans la zone du segment de liaison (22, 32) avec le matériau de la surface (11) du boitier, cette compression entrainant une déformation plastique du matériau de la surface du boitier (11) de sorte que le matériau de la surface du boitier (11) soit introduit dans la rainure (25, 35) ou dans les cavités, de façon à obtenir ainsi une surface de contact garantissant l'étanchéité et une résistance de contact minimum des partenaires de liaison, et
- le module accumulateur d'énergie (40) et/ou l'autre composant transmettant la tension est fixé sur la surface du boitier (11) par un écrou (45) vissé sur le segment de fixation (21, 31).

2. Dispositif conforme à la revendication 1,
**caractérisé en ce que**
le premier matériau est de l'aluminium ou un alliage d'aluminium tandis que le second matériau est de l'acier ou un alliage d'acier.

3. Dispositif conforme à l'une des revendications précédentes,
**caractérisé en ce que**
le boulon à encastrer (20, 30) est équipé d'un revêtement inhibiteur de corrosion et/ou d'un revêtement réduisant la résistance de contact vers la surface (11) du boitier.

4. Dispositif conforme à la revendication 3,
**caractérisé en ce que**
le revêtement est un revêtement à base de nickel-zinc.

5. Dispositif conforme à l'une des revendications précédentes,
**caractérisé en ce que**
le boulon à encastrer (20, 30) comporte à son extrémité située à l'opposé du segment de fixation (21, 31) une tête (23, 33) qui est amenée en appui sur la surface (11) du boitier à partir de l'extérieur du boitier (10).

6. Dispositif conforme à la revendication 5,
**caractérisé en ce que**
la tête (23, 33) comporte sur sa surface d'appui tournée vers la surface (11) du boitier un joint d'étanchéité, en particulier une bague torique.

7. Dispositif conforme à l'une des revendications précédentes,
**caractérisé en ce que**
le diamètre externe du segment de liaison (22, 32) du boulon à encastrer (20, 30) est le diamètre interne de l'évidement associé (13, 14) de la surface (11) du boitier sont choisis de façon à obtenir un ajustage serré du segment de liaison (22, 32) et de l'évidement (13, 14).

8. Dispositif conforme à l'une des revendications précédentes,
**caractérisé en ce que**
la surface (11) du boitier est le fond du boitier (10).
